**Europäisches Patentamt**

**European Patent Office**

**Office européen des brevets**

(11) Veröffentlichungsnummer: **0 214 605 B1**

## EUROPÄISCHE PATENTSCHRIFT

(45) Veröffentlichungstag der Patentschrift: **11.09.91**

(51) Int. Cl.5: **B60H 1/00**

(21) Anmeldenummer: **86112138.2**

(22) Anmeldetag: **02.09.86**

(54) **Heiz- und/oder Klimaanlage für Kraftfahrzeuge.**

(30) Priorität: **11.09.85 DE 3532463**

(43) Veröffentlichungstag der Anmeldung:
**18.03.87 Patentblatt 87/12**

(45) Bekanntmachung des Hinweises auf die
Patenterteilung:
**11.09.91 Patentblatt 91/37**

(84) Benannte Vertragsstaaten:
**DE FR GB IT SE**

(56) Entgegenhaltungen:
**DE-A- 2 849 275**
**DE-B- 1 072 495**
**GB-A- 1 017 378**

(73) Patentinhaber: **Behr GmbH & Co.**
**Mauserstrasse 3**
**W-7000 Stuttgart 30(DE)**

(72) Erfinder: **Kampf, Hans, Dipl.-Ing.**
**Bernsteinstrasse 45**
**W-7000 Stuttgart 75(DE)**
Erfinder: **Kern, Josef, Dipl.-Ing.**
**Im Bühl 5**
**W-7077 Alfdorf(DE)**
Erfinder: **Schweizer, Gebhard, Dipl.-Ing.**
**Daimlerstrasse 10**
**W-7253 Renningen(DE)**
Erfinder: **Weible, Reinhold, Dipl.-Ing. (FH)**
**Helmulfstrasse 8**
**W-7000 Stuttgart 40(DE)**

(74) Vertreter: **Wilhelm, Hans-Herbert, Dr.-Ing. et al**
**Wilhelm & Dauster Patentanwälte Hospital-**
**strasse 8**
**W-7000 Stuttgart 1(DE)**

**Beschreibung**

Die Erfindung betrifft eine Heiz- und/oder Klimaanlage für Kraftfahrzeuge mit wenigstens einem Gebläse zur Steuerung der Menge der dem Kraftfahrzeuginnenraum zugeführten Luft und mit wenigstens einem beheizbaren Heizkörper zur Steuerung der Temperatur der dem Kraftfahrzeuginnenraum zugeführten Luft sowie mit im Luftstrom zum Kraftfahrzeuginnenraum angeordneten Luftverteil- und Luftleitelementen zur Einstellung der Temperatur der der Fahrer- und der Beifahrerseite zugeführten Luft.

Bei einer derartigen Heiz- und/oder Klimaanlage für Kraftfahrzeuge, wie sie zum Beispiel aus der GB-A-1 017 378 bekannt ist, wird mit einem steuerbaren Gebläse Frischluft dem Kraftfahrzeuginnenraum zugeführt und mit Hilfe eines beheizbaren Heizkörpers die Luft, falls dies erwünscht ist, aufgeheizt. Ggf. kann ein mit einem Kompressor gekoppelter Verdampfer vorgesehen sein, der die Luft abkühlt. Die auf eine gewünschte Temperatur aufgeheizte und/oder abgekühlte Luft wird über Luftverteil- und Luftleitelemente der Fahrer- und der Beifahrer-Seite des Kraftfahrzeuginnenraums zugeführt. Dabei ist die Temperatur der zugeführten Luft durch Einwirkung insbesondere auf den Heizkörper und/oder den Verdampfer vom Benutzer steuerbar.

Hierzu ist es aus der DE-A-28 49 275 bekannt, zur getrennten Steuerung der Temperatur der der Fahrer- bzw. der Beifahrerseite des Kraftfahrzeuginnenraums zugeführten Luft zwei unabhängig voneinander steuerbare Wärmetauscher vorzusehen.

Diese bekannten Heiz- und/oder Klimaanlagen ermöglichen eine feinfühlige Steuerung der klimatischen Verhältnisse der Fahrer- und der Beifahrerseite des Kraftfahrzeuginnenraums. Zur weiteren Komforterhöhung ist es allerdings wünschenswert, die zugeführte Luft bei Bedarf auch von unerwünschten Gerüchen und ggf. von Staubteilchen reinigen zu können.

Aufgabe der Erfindung ist es daher, eine Heiz- und/oder Klimaanlage für Kraftfahrzeuge zu schaffen, die unter allen Betriebsbedingungen eine feinfühlige Steuerung der klimatischen Verhältnisse der Fahrer- und der Beifahrerseite des Kraftfahrzeugraums zuläßt und bei der es zur weiteren Komforterhöhung bei Bedarf möglich ist, unerwünschte Gerüche aus der zugeführten Luft herauszufiltern.

Gelöst wird die Aufgabe dadurch, daß bei einer Heiz- und/oder Klimaanlage für Kraftfahrzeuge der eingangs genannten Art wenigstens ein Geruchsfilter im Luftstrom zum Kraftfahrzeuginnenraum vor dem Gebläse sowie wenigstens ein Bypass zur Umgehung der Geruchsfilter und ein Kanal zur Rückführung von Luft aus dem Kraftfahrzeuginnenraum vorgesehen sind, wobei dieser Kanal vor dem Geruchsfilter angeschlossen ist.

Je nach Bedarf kann dadurch der Luftstrom zur Reinigung von unerwünschten Gerüchen über den Geruchsfilter und ansonsten über den Bypass geführt werden, ohne dann den Geruchsfilter unnötigerweise zu beanspruchen.

Weitere Merkmale und Vorteile der Erfindung ergeben sich aus den Unteransprüchen.

Besonders vorteilhaft ist es, zur schnellen Aufheizung eine Zusatzheizung im Luftstrom zum Kraftfahrzeuginnenraum vorzusehen. Damit ist es möglich, auch direkt nach dem Start der das Kraftfahrzeug antreibenden Brennkraftmaschine und damit bei noch nicht beheizten Heizkörpern die dem Kraftfahrzeuginnenraum zugeführte Luft schnell anzuwärmen und damit die Temperatur im Innenraum auf den vom Benutzer gewünschten Wert zu steuern. Insbesondere bei extrem niederen Außentemperaturen ist dies im Hinblick auf eine schnelle Enteisung der Windschutzscheibe äußerst nützlich.

Sind mehrere Heizkörper zur getrennten Steuerung der Temperatur der der Fahrer- und der Beifahrerseite des Kraftfahrzeuginnenraums zugeführten Luft vorgesehen, so ist es zweckmäßig, jedem Heizkörper eine Zusatzheizung zuzuordnen. Dadurch ist auch bei kalter Brennkraftmaschine eine individuelle Steuerung der klimatischen Verhältnisse der Fahrer- und der Beifahrerseite möglich.

Besonders vorteilhaft ist es, die Zusatzheizung elektrisch zu betreiben. Hierzu können beispielsweise metallische Heizleiter oder sogenannte PTC-Heizelemente verwendet werden. Diese Heizelemente werden zweckmäßig als von Luft durchströmbare, poröse Körper ausgebildet. Die Energie zum Betrieb der elektrischen Zusatzheizung kann dem Fahrzeugakkumulator und/oder dem Fahrzeuggenerator und/oder einer externen Spannungs- bzw. Stromquelle entnommen werden. Durch diese Ausgestaltung der Zusatzheizung wird erreicht, daß für einen Einbau der Zusatzheizung in ein Kraftfahrzeug nur die im Kraftfahrzeug schon vorhandenen elektrischen Elemente zur Energiebereitstellung bzw. -speicherung und die elektrischen Heizelemente aneinander angepaßt werden müssen.

Des weiteren ist es besonders vorteilhaft, bei dieser oder einer weiteren, eigens dem Fondbereich des Kraftfahrzeuginnenraums zugeordneten Kühl- und/oder Heizeinrichtung einen Staubfilter, insbesondere vor einem Verdampfer und einem Gebläse, vorzusehen. Durch diese Maßnahme wird mit einfachen Mitteln eine ausreichende Kühlung sowie eine Säuberung auch der dem Fondbereich zugeführten Luft erreicht. Besonders zweckmäßig ist es dabei, zur Zuführung von Luft aus dem Kraftfahrzeuginnenraum zum Luftstrom zum Fondbereich einen Kanal vorzusehen, der insbesondere den Fondbereich des Kraftfahrzeuginnenraums mit dem Staubfilter verbindet. Dies bewirkt, daß die Kühleinrichtung nur die ggf. schon abgekühlte Luft aus dem Kraftfahrzeuginnenraum abkühlen muß und damit wesentlich effektiver arbeitet. Gleichzeitig wird durch die Verbindung des Fondbereichs mit der Kühleinrichtung die dort befindliche, aufgeheizte Luft dem Innenraum entzogen und von der Kühleinrichtung abgekühlt.

Weitere Merkmale und Vorteile der Erfindung ergeben sich aus der nachfolgenden Beschreibung der in der Zeichnung dargestellten Ausführungsformen und den Unteransprüchen. Es zeigen:

Fig. 1 eine schematische Darstellung der Luftführung einer erfindungsgemäßen Heiz- und/oder Klimaanlage für Kraftfahrzeuge.

Fig. 2 den Querschnitt einer Ausführungsform einer erfindungsgemäßen Heiz- und/oder Klimaanlage längs der Ebene C-C der Fig. 3,

Fig. 3 den Querschnitt der Heiz- und/oder Klimaanlage der Fig. 2 längs der Ebene A-A der Fig. 2,

Fig. 4 den Querschnitt der Heiz- und/oder Klimaanlage der Fig. 2 längs der Ebene B-B der Fig. 2 und

Fig. 5 die schematische Darstellung einer Ausführungsform einer erfindungsgemäßen Kühleinrichtung im Heck eines Kraftfahrzeugs.

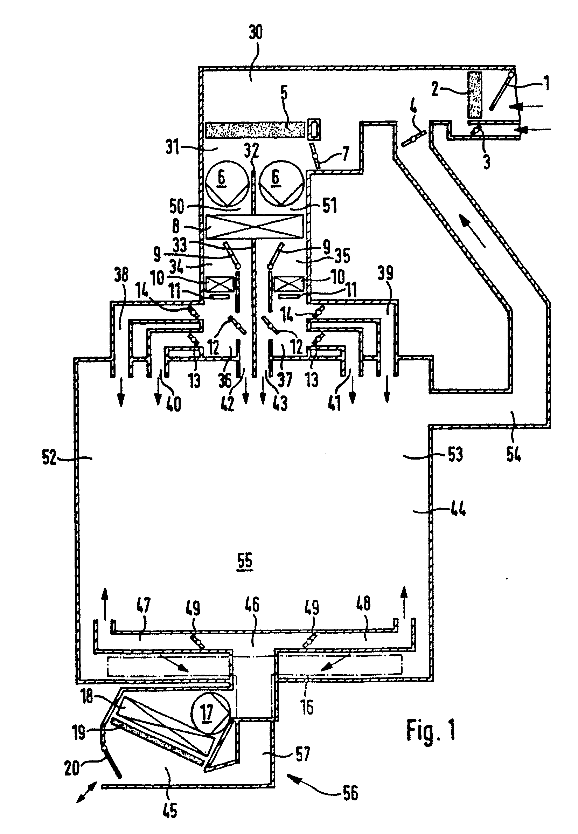

In der in der Fig. 1 dargestellten Luftführung einer erfindungsgemäßen Heiz- und/oder Klimaanlage für Kraftfahrzeuge ist die Strömungsrichtung der Luft in dieser Anlage mit Pfeilen dargestellt. Eine Frischluftklappe 1 ist in einem Luftzuführkanal bezüglich der Luftströmung vor einem Staubfilter 2 angeordnet. Beide, die Frischluftklappe 1 und das Staubfilter 2 können mit Hilfe eines weiteren Bypasskanals, in dem eine Staubfilter-By-passklappe 3 angeordnet ist, umgangen werden. Entweder über die Frischluftklappe 1 und das Staubfilter 2 oder über die Staubfilter-By-passklappe 3 strömt Frischluft von außerhalb des Kraftfahrzeugs in eine dem Staubfilter 2 und der Klappe 3 nachgeordnete Luftkammer 30. Eine Begrenzung der Luftkammer 30 wird von einem Geruchsfilter 5 gebildet, auf dessen der Luftkammer 30 gegenüberliegender Seite sich eine Luftkammer 31 befindet. Das Geruchsfilter 5 kann mit Hilfe eines By-pass, der eine By-passklappe 7 enthält, umgangen werden, so daß Luft aus der Luftkammer 30 entweder über das Geruchsfilter 5 oder über den By-pass in die Luftkammer 31 gelangt. In Strömungsrichtung der Luftströmung nach dem Geruchsfilter 5 und der By-passklappe 7 sind zwei Gebläse 6 angeordnet, die von einer Trennwand 32 voneinander getrennt sind. Dadurch entstehen nach den beiden unabhängig voneinander steuerbaren Gebläsen 6 zwei voneinander getrennte Luftkammern 50 und 51. Diese grenzen an einen Verdampfer 8 an, auf dessen gegenüberliegender Seite sich zwei durch eine Trennwand 33 voneinander getrennte Luftkammern 34 und 35 befinden. Die Trennwände 32 und 33 sind dabei im Bereich des Verdampfers 8 fluchtend angeordnet. Die Luftkammern 34 und 35 teilen sich jeweils in zwei Luftzuführkanäle auf, von denen jeweils einer direkt zum Innenraum 44 des Kraftfahrzeugs führt. Bei diesen beiden zuletzt genannten Luftkanälen handelt es sich um die mittlere Belüftung 42 und 43 der Fahrer- und der Beifahrerseite 52 und 53 des Kraftfahrzeuginnenraums 44. Die beiden anderen Luftzuführkanäle führen von der Luftkammer 34 bzw. 35 über jeweils einen wasserseitig temperaturgeregelten Heizkörper 10 und eine Zusatzheizung 11 in eine Luftkammer 36 bzw. 37. Am Beginn der Luftzuführkanäle befinden sich im Bereich der Luftkammern 34 bzw. 35 jeweils eine Belüftungsklappe 9, die den Luftstrom zu den jeweiligen Luftzuführkanälen steuert. Des weiteren sind die Luftkammer 36 bzw. 37 jeweils mittels einer Schichtungsklappe 12 mit dem zu den Belüftungen 42 bzw. 43 führenden Luftzuführkanälen verbunden. Schließlich führen von den Luftkammer 36 und 37 jeweils zwei weitere Luftzuführkanäle zum Innenraum 44 des Kraftfahrzeugs, nämlich ein Kanal 38 zum Fußraumbereich der Fahrerseite 52, ein Kanal 39 zum Fußraumbereich der Beifahrerseite 53, ein Kanal 40 zum Bereich der Windschutzscheibe der Fahrerseite 52 sowie ein Kanal 41 zum Bereich der Windschutzscheibe der Beifahrerseite 53. In den Kanälen 38 und 39 sind dabei Fußraumklappen 14 angeordnet, während sich in den Kanälen 40 und 41 Entfrostungsklappen 13 befinden, die jeweils der Steuerung der Luftmenge zu den jeweiligen Bereichen des Innenraums 44 dienen.

Insbesondere die Anordnung und Steuerung der zuletzt beschrieenen Luftleit- und Luftverteilelemente ist in der nicht vorveröffentlichten DE-A-35 14 359 desselben Anmelders beschrieben.

Zur Rückführung von Luft aus dem Innenraum 44 des Kraftfahrzeugs ist ein Kanal 54 vorgesehen, der den Innenraum 44 mit der Luftkammer 30 verbindet. Im Kanal 54 ist eine Umluftklappe 4 angeordnet, die die Menge der rückgeführten Luft, bestimmt. Es ist möglich, daß, abweichend von der Fig. 1, der Kanal 54 nicht nur an die Beifahrerseite 53 des Innenraums 44 angeschlossen ist, sondern in entsprechender Weise auch an die Fahrerseite 52 und/oder den Fondbereich 55 des Innenraums 44.

Während die bisher beschriebene Anlage der Steuerung der klimatischen Verhältnisse der Fahrer- und Beifahrerseite 52 und 53 des Innenraums 44 des Kraftfahrzeugs diente und im vorderen Bereich desselben, insbesondere im Bereich des Motorraums des Kraftfahrzeugs angeordnet ist, ist zur Steuerung der klimatischen Verhältnisse im Fondbereich 55 des Innenraums 44 eine Kühleinrichtung 56 vorgesehen, die sich insbesondere im rückwärtigen Bereich des Kraftfahrzeugs befindet, beispielsweise im Bereich des Kofferraums des Kraftfahrzeugs. Die Kühleinrichtung 56 besteht aus einem Heckstaubfilter 19, einem Heckverdampfer 15 und einem Heckgebläse 17, die bezüglich der sie durchströmenden Luft hintereinander geschaltet sind und dadurch eine Luftkammer 45 mit einer Luftkammer 46 verbinden. Die Luftkammer 45 ist über einen Zuführkanal 57 an eine Entlüftung 16 angeschlossen, die Luft vom Innenraum 44, insbesondere aus dem Fondbereich 55 des Innenraums 44 aufnimmt. Die Luftkammer 46 ist über Kanäle 47 und 48 mit dem linken und dem rechten Bereich des Fondbereichs 55 verbunden, wobei in den Kanälen 47 und 48 sich jeweils eine Verteilerklappe 49 befindet. Eine Begrenzung der Luftkammer 45 wird von einer Entlüftungsklappe 20 gebildet, über die Frischluft von außerhalb des Kraftfahrzeugs in die Luftkammer 45 einströmen oder Luft aus dem Innenraum 44 des Kraftfahrzeugs ausströmen kann.

Sämtliche Bauelemente in der Fig. 1, mit deren Hilfe die Luft in irgendeiner Art und Weise beeinflußt werden kann, sind unabhängig voneinander steuerbar. Insbesondere sind die beiden Gebläse 6, wie auch die beiden wasserseitig temperaturgeregelten Heizkörper 10 und die beiden Zusatzheizungen 11 jeweils getrennt voneinander steuerbar. Dadurch ist es möglich, die Temperatur und die Menge der der Fahrer- und der Beifahrerseite 52 und 53 zugeführten Luft getrennt und unabhängig voneinander zu steuern. Mit Hilfe der Klappen 9, 12, 13 und 14 ist es des weiteren möglich, eine Temperaturschichtung sowie eine Luftverteilung auf die verschiedenen Bereiche des Innenraums 44 des Kraftfahrzeugs durchzuführen. Insbesondere die Temperaturschichtung ist dabei der schon erwähnten DE-A-3514359 zu entnehmen. Des weiteren ist es möglich, abweichend von der Fig. 1 zwei voneinander getrennte und unabhängig voneinander steuerbare Verdampfer vorzusehen und dadurch zwei vollkommen voneinander getrennte Luftzuführungen zur Fahrer- und Beifahrerseite 52 und 53 des Kraftfahrzeuginnenraums 44 zu bilden.

Auch die einzelnen Bauelemente der Kühleinrichtung 56, insbesondere der Verdampfer 18, das Gebläse 17 und die Klappen 20 und 49 sind unabhängig voneinander beeinflußbar. Dadurch ist es möglich, die Temperatur und die Menge der dem Fondbereich 55 des nicht durch eine Trennwand unterteilten Fahrzeuginnenraumes zugeführten Luft für sich zu steuern. Insbesondere kann mit Hilfe der Klappe 49 die linke und die rechte Seite des Fondbereichs 55 verschieden klimatisiert werden.

Besonders vorteilhaft ist es, die im Heckbereich des Kraftfahrzeugs angeordnete Kühleinrichtung 56 für den Fondbereich 55 des Innenraums 44 alleinstehend zu verwenden, also ohne den Teil der Heiz- und/oder Klimaanlage, der im Motorraum des Kraftfahrzeugs untergebracht ist. Dadurch ist es möglich, insbesondere bei hohen Außentemperaturen, die Aufheizung des Fondbereichs 55 des Innenraums 44 des Kraftfahrzeugs zu unterbinden. Gleichzeitig wird jedoch durch die Kühlung des Fondbereichs 55 der vordere Bereich des Innenraums 44, also die Fahrer- und Beifahrerseite 52 und 53 nicht beeinflußt. Insbesondere entsteht durch die Kühlung des Fondbereichs 55 kein Zug von vorne nach hinten im Kraftfahrzeuginnenraum 44.

Ebenfalls besonders zweckmäßig ist es, die Zusatzheizung 11 alleinstehend zu verwenden, also nur zusammen mit einem Heizkörper 10. Dadurch ist es, wie auch später noch ausgeführt werden wird, in besonders vorteilhafter Weise möglich, nach dem Start der das Kraftfahrzeug antreibenden Brennkraftmaschine, also bei noch kalten Heizkörpern 10, mit Hilfe der Zusatzheizung 11 die zum Innenraum 44 strömende Luft zu erwärmen. Die Zusatzheizung 11 ist dabei unabhängig vom Betriebszustand der Brennkraftmaschine, was ebenfalls noch genauer erläutert werden wird. Ein weiterer Vorteil der Zusatzheizung besteht darin, daß sie die strömende Luft gleichrichtet, also eventuell vorhandene Verwirbelungen wieder ausrichtet.

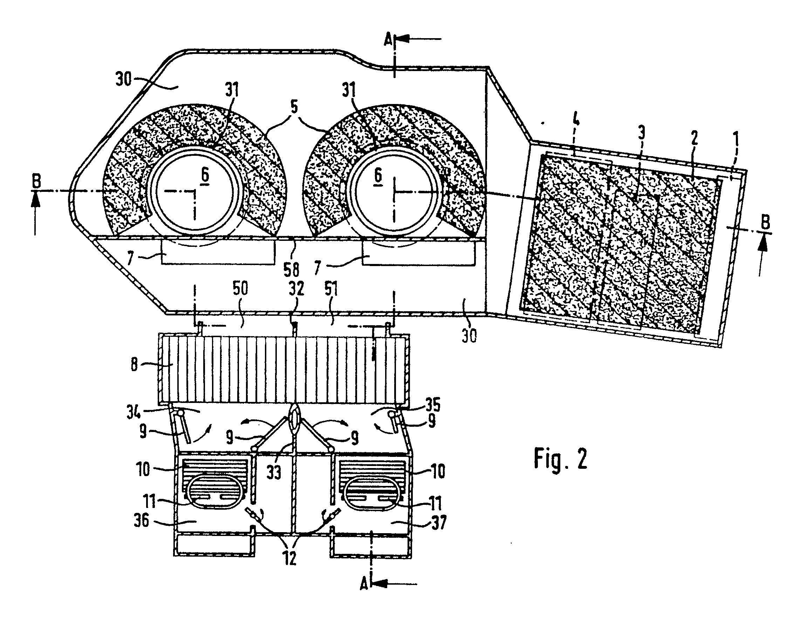

In der nachfolgenden Beschreibung der Fig. 2 bis 5 entsprechen die verwendeten Bezugsziffern denselben der Fig. 1.

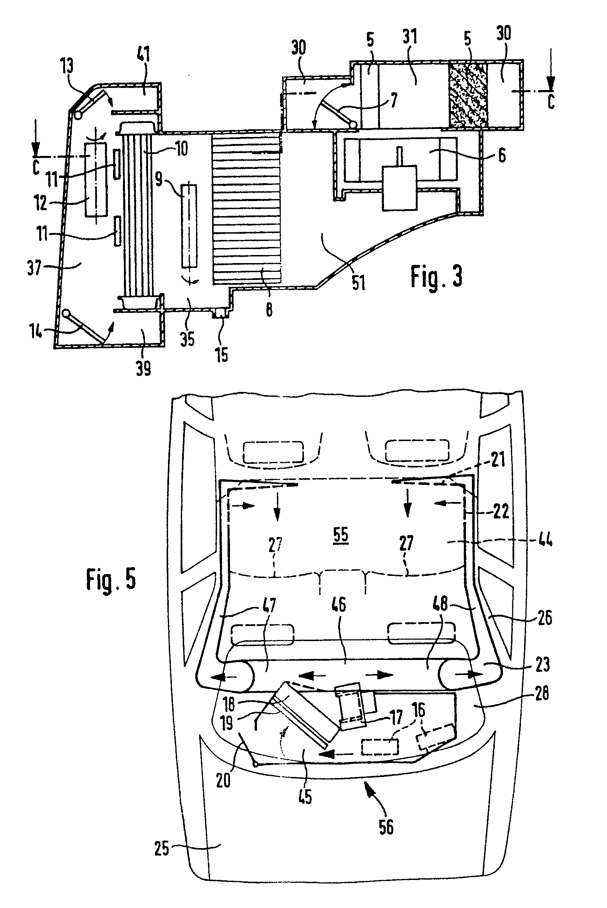

Dem in der Fig. 2 gezeigten Querschnitt einer Ausführungsform einer erfindungsgemäßen Heizund/oder Klimaanlage ist die spezielle Anordnung des Staubfilters 2, zweier Geruchsfilter 5, des Verdampfers 8, der Heizkörper 10 und der Zusatzheizungen 11 zu entnehmen. Die Frischluft gelangt über die Klappe 1 und das Staubfilter 2 oder über die Klappe 3 zur Luftkammer 30, von wo aus sie bei geöffneten Klappen 7 direkt zur Luftkammer 31 strömt, bei geschlossenen Klappen 7 jedoch über die Geruchsfilter 5. Die Luftkammer 31 besteht zu diesem Zweck aus zwei Teilen, die durch eine Wand 58 getrennt sind. Von der Luftkammer 31 gelangt die Luft in lotrechter Richtung zur Zeichenebene der Fig. 2 zu den beiden Gebläsen 6 und von dort in die Luftkammern 50 und 51. Diese beiden Luftkammern 50 und 51 befinden sich in der Fig. 2 in einer tiefer liegenden Ebene als die beiden Luftkammern 30 und 31. Entlang der die beiden Luftkammern 50 und 51 schneidenden strichpunktierten Linie in der Fig. 2, die zur Schnittebene des Schnitts B-B gehört, findet also ein Ebenenversatz statt. Dies ist besonders deutlich dem Schnitt A-A der Fig. 3 zu entnehmen.

Von den Luftkammern 50 und 51 gelangt die Luft zum Verdampfer 8 und von dort über die beiden Luftkammern 34 und 35 zu den beiden Heizkörpern 10 und den Zusatzheizungen 11 oder direkt über einen von den Klappen 9 gesteuerten Kanal in den Fahrzeuginnenraum. In der Fig. 2 sind jedem Heizkörper 10 jeweils zwei Zusatzheizungen 11 zugeordnet. Schließlich ist der Fig. 2 noch die Anordnung der Klappen 9 und 12 zu entnehmen.

Die beiden Geruchsfilter 5 sind bei der in der Fig. 2 dargestellten Ausführungsform als Hohlzylindersektoren ausgebildet und koaxial zu den Gebläsen 6 im Ansaugbereich der beiden Gebläse 6 angeordnet. Dies hat den Vorteil, daß die beiden Geruchsfilter 5 der auf sie zuströmenden Luft eine möglichst große Oberfläche und damit einen geringen Luftwiderstand bieten. Ebenfalls wird dadurch erreicht, daß die beispielsweise aus Aktivkohle bestehenden Geruchsfilter 5 mit einem möglichst großen Volumen ausgestattet werden können.

Bei dem Verdampfer 8 kann es sich um einen üblichen Verdampfer handeln, der von einem Kompressor, insbesondere einem leistungsgeregelten Klimakompressor versorgt wird. Bei den beiden Heizkörpern 10 können bekannte Wärmetauscher verwendet werden, die möglichst große, von der Luftströmung beaufschlagte Oberflächen besitzen und vom Kühlwasser der das Kraftfahrzeug antreibenden Brennkraftmaschine beheizt werden.

Die Zusatzheizungen 11 dienen der schnellen Aufheizung der zum Kraftfahrzeuginnenraum 44 strömenden Luft. Ihre Funktion ist unabhängig vom Betriebszustand des Kraftfahrzeugs, insbesondere unabhängig von der momentanen Betriebstemperatur der das Kraftfahrzeug antreibenden Brennkraftmaschine. Es ist also möglich, bei kalter Brennkraftmaschine und damit kalten Heizkörpern 10 mit Hilfe der Zusatzheizungen 11 die zum Innenraum 44 strömende Luft zu erwärmen. Besonders vorteilhaft ist es, die Zusatzheizungen 11 elektrisch zu betreiben. In diesem Fall kann es sich bei den Zusatzheizungen 11 um metallische Heizleiter oder, bei einer besonders zweckmäßigen Ausgestaltung, um sogenannte PTC-Heizelemente handeln. PTC-Elemente sind beispielsweise keramische, poröse Kaltleiter, die in der Form von Waben oder in Verbindung mit Kühlkörpern aufgebaut sind. Werden sie von elektrischem Strom durchflossen, so erwärmen sie sich auf eine bestimmte, materialabhängige Temperatur, die unabhängig von der anliegenden Spannung ist. Durch die insbesondere in der Wabenbauform große Oberfläche der PTC-Heizelemente wird die in ihnen erzeugte Wärme an die sie durchströmende Luft weitergegeben. Die Energie zur Stromversorgung der PTC-Heizelemente wird entweder vom Fahrzeugakkumulator oder vom Fahrzeuggenerator oder von beiden oder von externen Stromquellen bereitgestellt. Besonders vorteilhaft ist es für eine ausreichende Energieversorgung der PCT-Heizelemente, den Akkumulator und den Generator größer auszulegen und damit an den höheren Energiebedarf aufgrund der Zusatzheizungen 11 anzupassen. Zum Zwecke der externen Stromversorgung der Zusatzheizungen 11 ist ein Anschluß, insbesondere eine Steckverbindung vorgesehen, die beispielsweise an das 220V-Wechselstromnetz anschließbar ist. Zur Anpassung der Zusatzheizungen 11 an die externe Wechselstromversorgung werden Transformatoren- und Gleichrichteranordnungen verwendet, die in das Kraftfahrzeug eingebaut sind.

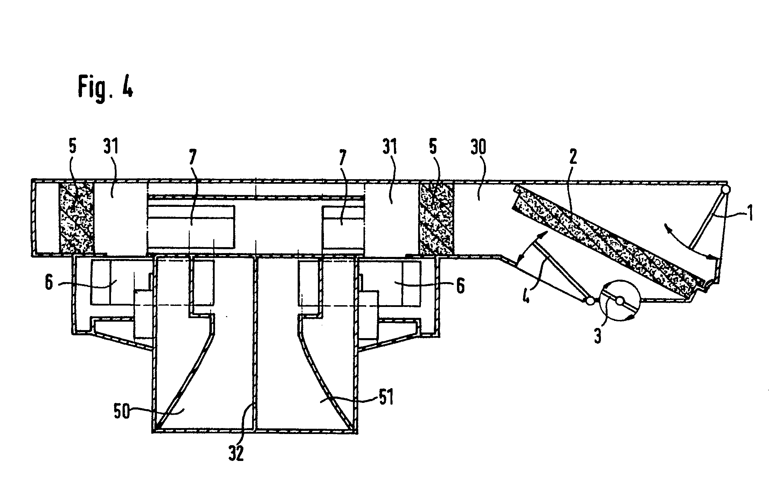

Die Fig. 3 ist ein Querschnitt längs der Ebene A-A der Fig. 2 und die Fig. 4 ein Querschnitt längs der Ebene B-B der Fig. 2. Wichtig ist, daß die Ebene B-B in der Fig. 2 zwischen den Mittelachsen der Gebläse 6 einen Ebenenversatz aufweist, was insbesondere in der Fig. 4 berücksichtigt werden muß. Die im Zusammenhang mit der Fig. 2 beschriebene versetzte Anordnung der Luftkammern 30 und 31 bzw. 50 und 51 ist der Fig. 3, insbesondere der strichpunktierten Linie der Schnittebene C-C der Fig. 2 zu entnehmen. Die Fig. 3 und 4 zeigen nochmals die Anordnung der im Zusammenhang mit der Fig. 2 erläuterten Bauelemente der erfindungsgemäßen Heiz- und/oder Klimaanlage sowie insbesondere bei den dargestellten Klappen auch deren Funktionsweise. Zusätzlich ist in der Fig. 3 ein Wasserablauf 15 dargestellt, aus dem ggf. am Verdampfer niedergeschlagenes Wasser abfließen kann.

Die Fig. 5 zeigt den Heckbereich 25 eines Kraftfahrzeugs. Dort ist hinter den Fondsitzen 27 die Kühleinrichtung 56 eingebaut, die aus dem Heckstaubfilter 19, dem Heckverdampfer 18, dem Heckgebläse 17 sowie der Entlüftungsklappe 20 besteht. Die Kühleinrichtung 56 saugt Luft über Entlüftungen 16 aus dem Fondbereich 55 des Kraftfahrzeuginnenraums 44 an, insbesondere aus dem Bereich über der hinter den Fondsitzen 27 befindlichen Hutablage, also unterhalb der hinteren Scheibe 28. Vom Heckverdampfer 18 über das Heckgebläse 17 gelangt die Luft über die Luftkammer 46 und die Luftkanäle 47 und 48 in den Fondbereich 55 des Innenraums 44. Dabei sind in den C-Säulen 26 des Kraftfahrzeugs die Luftkanäle 47 und 48 zu mit der Kennziffer 23 bezeichneten C-Säulen-Kanälen ausgebildet. Durch diese C-Säulen-Kanäle 23 wird die abgekühlte Luft entlang den beiden Dachseitenkanten des Kraftfahrzeugs etwa bis zur Mitte des Dachs des Kraftfahrzeugs nach vorne geführt und dort über Dachausströmer 21 sowie Dachholmausströmer 22 dem Fondbereich 55 des Innenraums 44 vor den Rücksitzen zugeführt. Die Dachausströmer 21 und Dachholmausströmer 22 sind derart ausgebildet, daß sie den Passagieren im Fond des Kraftfahrzeugs die Luft von vorne und von der Seite zuführen und gleichzeitig den Luftstrom diffus verteilen. Damit ist es möglich, die linke und die rechte Seite des Fondbereichs 55 zu klimatisieren. Sind in den Luftkanälen 47 und 48, wie dies in der Fig. 1 dargestellt ist, Verteilerklappen 49 angeordnet, so ist es des weiteren möglich, die linke und die rechte Seite des Fondbereichs 55 unabhängig voneinander zu temperieren. Die in der Fig. 5 gezeichneten Pfeile sollen analog zur Fig. 1 die Luftströmungen im Kraftfahrzeug andeuten.

Abschließend sei nochmals darauf hingewiesen, daß nicht nur die gesamte, in der Fig. 1 schematisch dargestellte erfindungsgemäße Heiz- und/oder Klimaanlage eine exakte Steuerung der klimatischen Verhältnisse im Innenraum eines Kraftfahrzeugs ermöglicht und damit den Komfort erhöht, sondern daß auch schon einzelne Bauelemente der Fig. 1, insbesondere die Verwendung einer vom Betriebszustand der Brennkraftmaschine unabhängigen Zusatzheizung und/oder die Verwendung einer Kühleinrichtung für den Fondbereich des Innenraums dies bewirken können.

**Patentansprüche**

1. Heiz- und/oder Klimaanlage für Kraftfahrzeuge mit wenigstens einem Gebläse (6) zur Steuerung der Menge der dem Kraftfahrzeuginnenraum (44) zugeführten Luft und mit wenigstens einem beheizbaren Heizkörper (10) zur Steuerung der Temperatur der dem Kraftfahrzeuginnenraum (44) zugeführten Luft sowie mit im Luftstrom zum Kraftfahrzeuginnenraum angeordneten Luftverteil- und Luftleitelementen zur Einstellung der Temperatur der der Fahrer- und der Beifahrerseite zugeführten Luft, dadurch gekennzeichnet, daß wenigstens ein Geruchsfilter (5) im Luftstrom zum Kraftfahrzeuginnenraum (44) vor dem Gebläse (6) vorgesehen ist, daß wenigstens ein Bypass (7) zur Umgehung des Geruchsfilters (5) und zur Rückführung von Luft aus dem Kraftfahrzeuginnenraum (44) ein Kanal (54) vorgesehen ist, der vor dem Geruchsfilter (5) angeschlossen ist.

2. Heiz- und/oder Klimaanlage nach Anspruch 1, dadurch gekennzeichnet, daß nach dem Geruchsfilter (5) und dem Gebläse (6) und vor dem Heizkörper (10) ein Verdampfer (8) angeordnet ist.

3. Heiz- und/oder Klimaanlage nach Anspruch 1 oder 2, dadurch gekennzeichnet, daß das Geruchsfilter (5) als zu den Gebläsen (6) koaxialer Hohlzylindersektor ausgebildet und im Ansaugbereich (31) des Gebläses (6) angeordnet ist.

4. Heiz- und/oder Klimaanlage nach einem der Ansprüche 1 bis 3, dadurch gekennzeichnet, daß wenigstens ein Staubfilter (2) im Luftstrom zum Kraftfahrzeuginnenraum (44) vorgesehen ist.

5. Heiz- und/oder Klimaanlage nach Anspruch 4, dadurch gekennzeichnet, daß das Staubfilter (2) vor dem Geruchsfilter (5) angeordnet ist.

6. Heiz- und/oder Klimaanlage nach Anspruch 4 oder 5, dadurch gekennzeichnet, daß wenigstens ein Bypass (3) zur Umgehung des Staubfilters (2) vorgesehen ist.

7. Heiz- und/oder Klimaanlage nach einem der Ansprüche 1 bis 6, dadurch gekennzeichnet, daß zur schnellen Aufheizung eine Zusatzheizeinrichtung (11) im Luftstrom zum Kraftfahrzeuginnenraum (44) vorgesehen ist.

8. Heiz- und/oder Klimaanlage nach Anspruch 7, dadurch gekennzeichnet, daß wenigstens je eine Zusatzheizeinrichtung (11) nach jedem Heizkörper (10) angeordnet ist.

9. Heiz- und/oder Klimaanlage nach Anspruch 7 oder 8, dadurch gekennzeichnet, daß die Zusatzheizeinrichtung (11) elektrisch betrieben ist.

10. Heiz- und/oder Klimaanlage nach Anspruch 9, dadurch gekennzeichnet, daß die Zusatzheizeinrichtung (11) an eine externe elektrische Energiequelle anschließbar ist.

11. Heiz- und/oder Klimaanlage nach einem der Ansprüche 1 bis 10, dadurch gekennzeichnet, daß bei einer dem Fondbereich (55) des Kraftfahrzeuginnenraums (44) eigens zugeordneten Kühl- und/oder Heizeinrichtung (56) ein Staubfilter (19) im Luftstrom zum Fondbereich (55) vorgesehen ist.

12. Heiz- und/oder Klimaanlage nach Anspruch 11, dadurch gekennzeichnet, daß das Staubfilter (19) vor einer Kühleinrichtung (56) angeordnet ist, welche einen Verdampfer (18) und ein Gebläse (17) beinhaltet.

13. Heiz- und/oder Klimaanlage nach Anspruch 11 oder 12, dadurch gekennzeichnet, daß zur Zuführung von Luft aus dem Kraftfahrzeuginnenraum (44) zum Fondbereich (55) ein Kanal (57) vorgesehen ist, welcher vor dem Staubfilter (19) angeschlossen ist.

14. Heiz- und/oder Klimaanlage nach einem der Ansprüche 11 bis 13, dadurch gekennzeichnet, daß Luftverteil- und Luftleitelemente (47, 48, 49) im Luftstrom zum Fondbereich (55) angeordnet sind.

15. Heiz- und/oder Klimaanlage nach einem der Ansprüche 11 bis 14, dadurch gekennzeichnet, daß die Kühl- und/oder Heizeinrichtung (56) über Leitungen (23, 47, 48) mit Luftaustrittselementen (21, 22) verbunden ist, die im vorderen Bereich des Fondbereichs (55) angeordnet sind.

16. Heiz- und/oder Klimaanlage nach Anspruch 15, dadurch gekennzeichnet, daß die Leitungen (23, 47, 48) an oder in den C-Säulen und/oder den Dachholmen des Kraftfahrzeugs geführt sind.

17. Heiz- und/oder Klimaanlage nach Anspruch 15 oder 16, dadurch gekennzeichnet, daß die Luftaustrittselemente (21, 22) als Luftaustrittsdiffusoren ausgebildet sind.

18. Heiz- und/oder Klimaanlage nach einem der Ansprüche 11 bis 17, dadurch gekennzeichnet, daß die Kühl- und/oder Heizeinrichtung (56) im Heckbereich (25) des Kraftfahrzeugs angeordnet ist.

19. Heiz- und/oder Klimaanlage nach einem der Ansprüche 1 bis 18, dadurch gekennzeichnet, daß im Kanal (54, 57) eine Klappe (4, 20) vorgesehen ist.

20. Heiz- und/oder Klimaanlage nach einem der Ansprüche 12 bis 19, dadurch gekennzeichnet, daß eine Klappe (1, 20) im Luftstrom vor dem Staubfilter (2, 19) angeordnet ist.

## Claims

1. A heating and/or air conditioning plant for motor vehicles with at least one blower (6) for controlling the quantity of air fed to the interior (44) of the motor vehicle and with at least one heatable heater (10) for controlling the temperature of the air fed to the interior (44) of the motor vehicle and with, disposed in the airstream to the interior of the motor vehicle, air distributing and air guiding elements for adjusting the temperature of the air fed to the driver's and passenger's sides, characterised in that at least one odour filter (5) is provided in the airstream to the vehicle interior (44) upstream of the fan (6) and in that at least one bypass (7) is provided to bypass the odour filter (5) and to feed air back from the vehicle interior (44) through a duct (54) which is connected upstream of the odour filter (5).

2. A heating and/or air conditioning plant according to Claim 1, characterised in that a vaporiser (8) is disposed downstream of the odour filter (5) and the blower (6) and upstream of the heater (10).

3. A heating and/or air conditioning plant according to Claim 1 or 2, characterised in that the odour filter (5) is constructed as a segment of a hollow cylinder coaxial with the fans (6) and is disposed in the intake zone (31) of the blower (6).

4. A heating and/or air conditioning plant according to one of Claims 1 to 3, characterised in that at least one dust filter (2) is provided in the airstream to the vehicle interior (44).

5. A heating and/or air conditioning plant according to Claim 4, characterised in that the dust filter (2) is disposed upstream of the odour filter (5).

6. A heating and/or air conditioning plant according to Claim 4 or 5, characterised in that at least one bypass (3) is provided to circumvent the dust filter (2).

7. A heating and/or air conditioning plant according to one of Claims 1 to 6, characterised in that for rapid heating, an auxiliary heating arrangement (11) is provided in the airstream to the motor vehicle interior (44).

8. A heating and/or air conditioning plant according to Claim 7, characterised in that at least one auxiliary heating arrangement (11) is disposed downstream of each heater (10).

9. A heating and/or air conditioning plant according to Claim 7 or 8, characterised in that the auxiliary heater (11) is electrically operated.

10. A heating and/or air conditioning plant according to Claim 9, characterised in that the auxiliary heater (11) is adapted to be connected to an external electrical energy source.

11. A heating and/or air conditioning plant according to one of Claims 1 to 10, characterised in that in the case of a cooling and/or heating apparatus (56) which is associated with the bottom region (55) of the motor vehicle interior (44), a dust filter (19) is provided in the airstream to the bottom area (55).

**12.** A heating and/or air conditioning plant according to Claim 11, characterised in that the dust filter (19) is disposed upstream of a cooling arrangement (56) which contains an evaporator (18) and a blower (17).

**13.** A heating and/or air conditioning plant according to Claim 11 or 12, characterised in that to supply air from the motor vehicle interior (44) to the bottom area (55) a duct (57) is provided which is connected upstream of the dust filter (19).

**14.** A heating and/or air conditioning plant according to one of Claims 11 to 13, characterised in that air distributing and air guide elements (47, 48, 49) are disposed in the airstream to the bottom zone (55).

**15.** A heating and/or air conditioning plant according to one of Claims 11 to 14, characterised in that the cooling and/or heating arrangement (56) is connected by conductors (23, 47, 48) to air outlet elements (21, 22) disposed in the front portion of the bottom area (55).

**16.** A heating and/or air conditioning plant according to Claim 15, characterised in that the conductors (23, 47, 48) are guided on or in the C-columns and/or the roof members of the motor vehicle.

**17.** A heating and/or air conditioning plant according to Claim 15 or 16, characterised in that the air outlet elements (21, 22) are constructed as air outlet diffusers.

**18.** A heating and/or air conditioning plant according to one of Claims 11 to 17, characterised in that the cooling and/or heating apparatus (56) is disposed in the rear portion (25) of the motor vehicle.

**19.** A heating and/or air conditioning plant according to one of Claims 1 to 18, characterised in that a flap valve (4, 20) is provided in the duct (54, 57).

**20.** A heating and/or air conditioning plant according to one of Claims 12 to 19, characterised in that a flap valve (1, 20) is disposed in the airstream upstream of the dust filter (2, 19).

**Revendications**

**1.** Installation de chauffage et/ou de climatisation pour véhicules automobiles, comportant au moins un ventilateur (6) pour la commande de la quantité d'air introduit dans l'habitacle (44) du véhicule et au moins un radiateur chauffable (10) pour commander la température de l'air introduit dans l'habitacle (44) du véhicule, ainsi que des éléments de répartition et canalisation d'air disposés dans l'écoulement d'air vers l'habitacle du véhicule pour régler la température de l'air introduit du côté-conducteur et du côté-passager-avant, caractérisée en ce qu'il est prévu au moins un filtre d'odeurs (5) avant le ventilateur (6) dans l'écoulement d'air vers l'habitacle (44) du véhicule, en ce qu'il est prévu au moins un bypass (7) pour contourner le filtre d'odeurs (5) et un canal (54) pour renvoyer l'air à partir de l'habitacle (44) du véhicule, ce canal étant raccordé avant le filtre d'odeurs (5).

**2.** Installation de chauffage et/ou de climatisation selon la revendication 1, caractérisée en ce qu'il est prévu un évaporateur (8) après le filtre d'odeurs (5) et le ventilateur (6) et avant le radiateur (10).

**3.** Installation de chauffage et/ou de climatisation selon la revendication 1 ou 2, caractérisée en ce que le filtre d'odeurs (5) est agencé comme un secteur de cylindre creux coaxial au ventilateur (6) et disposé dans la zone d'aspiration (31) de ce ventilateur (6).

**4.** Installation de chauffage et/ou de climatisation selon une des revendications 1 à 3, caractérisée en ce qu'il est prévu au moins un filtre à poussières (2) dans l'écoulement d'air vers l'habitacle (44) du véhicule.

**5.** Installation de chauffage et/ou de climatisation selon la revendication 4, caractérisée en ce que le filtre à poussières (2) est disposé avant le filtre d'odeurs (5).

**6.** Installation de chauffage et/ou de climatisation selon la revendication 4 ou 5, caractérisée en ce qu'il est prévu au moins un bypass (3) pour contourner le filtre à poussières (2).

**7.** Installation de chauffage et/ou de climatisation selon une des revendications 1 à 6, caractérisée en ce que, pour un chauffage rapide, il est prévu un dispositif de chauffage additionnel (11) dans l'écoulement d'air vers l'habitacle (44) du véhicule.

**8.** Installation de chauffage et/ou de climatisation selon la revendication 7, caractérisée en ce qu'il est prévu au moins un dispositif de chauffage additionnel (11) après chaque radiateur (10).

9. Installation de chauffage et/ou de climatisation selon la revendication 7 ou 8, caractérisée en ce que le dispositif de chauffage additionnel (11) est actionné électriquement.

10. Installation de chauffage et/ou de climatisation selon la revendication 9, caractérisée en ce que le dispositif de chauffage additionnel (11) peut être relié à une source externe d'énergie électrique.

11. Installation de chauffage et/ou de climatisation selon une des revendications 1 à 10, caractérisée en ce que, dans le cas où un dispositif de refroidissement et/ou de chauffage (56) est associé de façon particulière à la partie arrière (55) de l'habitacle (44) du véhicule automobile, il est prévu un filtre à poussières (19) dans l'écoulement d'air vers la partie arrière (55).

12. Installation de chauffage et/ou de climatisation selon la revendication 11, caractérisée en ce que le filtre à poussières (19) est installé avant un dispositif de refroidissement (56), qui comporte un évaporateur (18) et un ventilateur (17).

13. Installation de chauffage et/ou de climatisation selon la revendication 11 ou 12, caractérisée en ce que, pour la canalisation de l'air de l'habitacle (44) du véhicule vers la partie arrière (55), il est prévu un canal (57), qui est raccordé avant le filtre à poussières (19).

14. Installation de chauffage et/ou de climatisation selon une des revendications 11 à 13, caractérisée en ce que des éléments de répartition et canalisation d'air (47, 48, 49) sont disposés dans l'écoulement d'air vers la partie arrière (55) du véhicule.

15. Installation de chauffage et/ou de climatisation selon une des revendications 11 à 14, caractérisée en ce que le dispositif de refroidissement et/ou de chauffage (56) est relié par l'intermédiaire de conduits (23, 47, 48) avec des éléments de sortie d'air (21, 22) qui sont disposés dans la zone avant de la partie arrière (55) du véhicule.

16. Installation de chauffage et/ou de climatisation selon la revendication 15, caractérisée en ce que les conduits (23, 47, 48) sont guidés sur ou dans les colonnes-C et/ou les membrures de toit du véhicule automobile.

17. Installation de chauffage et/ou de climatisation selon la revendication 15 ou 16, caractérisée en ce que les éléments de sortie d'air (21, 22) sont agencés comme des diffuseurs de sortie d'air.

18. Installation de chauffage et/ou de climatisation selon une des revendications 11 à 17, caractérisée en ce que le dispositif de refroidissement et/ou de chauffage (56) est disposé dans le coffre arrière (25) du véhicule automobile.

19. Installation de chauffage et/ou de climatisation selon une des revendications 1 à 18, caractérisée en ce qu'il est prévu un registre (4, 20) dans le canal (54, 57).

20. Installation de chauffage et/ou de climatisation selon une des revendications 12 à 19, caractérisée en ce qu'un registre (1, 20) est disposé dans l'écoulement d'air avant le filtre à poussières (2, 19).

Fig. 1

Fig. 2

Fig. 3

Fig. 5

# Fig. 4

EP 0 214 605 B1